# EUROPEAN PATENT APPLICATION

(11) **EP 1 919 151 A1**
(43) Date of publication of application: **07.05.2008**
(21) Application number: 07105248.4
(22) Date of filing: 29.03.2007
(51) Int. Cl.: H04L 27/26

(54) **System, apparatus, and method for processing a received orthogonal frequency division multiplexing signal**

(30) Priority: 02.11.2006 US 555894
(71) Applicant: MediaTek Inc., 1st Science-Based Industrial Park Hsin-Chu 300 (TW)
(72) Inventor: Yang, Shun-An, 514, Changhua County (TW)
(74) Representative: Viering, Jentschura & Partner

(57) **Abstract**

Systems, apparatuses, and methods for processing a received OFDM signal are provided. The system comprises a tuner and a signal processing unit. The tuner is configured to receive an OFDM signal. A signal processing unit is configured to search for a possible frequency of a symbol in the received OFDM signal for a TPS lock and to decide an ambiguous frequency range according to a transmission mode of the TPS lock. The possible frequency is close or equal to a center frequency of the symbol.

## Description

### CROSS-REFERENCES TO RELATED APPLICATIONS

Not applicable.

### BACKGROUND OF THE INVENTION

### Field of the Invention

The present invention relates to systems, apparatuses, and methods for processing a received Orthogonal Frequency Division Multiplexing (OFDM) signal; more particularly, the invention relates to searching a center frequency of a symbol in the received OFDM signal.

### Descriptions of the Related Art

Digital Video Broadcasting-Terrestrial/Handheld (DVB-T/H) techniques have been quickly developed in recent years to provide users with mobile televisions. Systems that comply with DVB-T/H standard sometimes have to search for the center frequency of the transmission band blindly when, for example, there is no additional information about the spectrum allocation of the transmission band, or when the transmission band is changed in different countries.

Transmission Parameter Signaling (TPS) is information carried by a transmitted signal to record transmission parameters to a receiver. The TPS records parameters such as code rates, transmission modes, and modulation types. The TPS has the advantage that it can be decoded correctly in an environment even with a very low signal-to-noise ratio (SNR). However, since the TPS appears periodically in frequency domain, it is possible for a receiver to tune to a wrong frequency while decoding the TPS correctly. This makes a false indication of frequency lock.

If there is a search for the center frequency, a DVB-T/H receiver starts to execute a tuning process to search the center frequency of the transmission band so that a transmitted signal can be received and decoded correctly. Most of the DVB-T/H receivers in the current market have the capability of successfully receiving the transmitted signal in a certain frequency that is not the center frequency but within an acceptable frequency range. For example, an Integrated Receiver and Decoder (IRD) that complies with the Nordig Unified Test specification is capable of successfully receiving transmitted signals in a frequency plus or minus 10 kHz in terms of the center frequency. The DVB-T receivers are better equipped to handle frequency deviation, which can be up to several hundreds kHz.

More specifically, DVB-T systems in the current market have 2K and 8K transmission modes, while DVB-H systems in the current market have 2K, 4K, and 8K transmission modes. The TPS subcarrier indexes appear periodically and are listed in Table 1. It is obvious that the spectra of the TPS subcarrier indexes in the 8K mode are just shifts of the spectra of the TPS subcarrier indexes in the 2K mode. More specifically, for an 8K mode OFDM symbol, if there is a TPS subcarrier index at specturm *k*, there is also another TPS subcarrier index at location 1704+*k*, 1704*2+*k*, and 1704*3+*k*, wherein k is a number between 0 and 1704.

**Table 1**

| **2K mode** | **8K mode** |
|---|---|
| 34 50 209 346 413 569 595 688 790 901 1073 1219 1262 1286 1469 1594 1687 | 34 50 209 346 413 569 595 688 790 901 1073 1219 1262 1286 1469 1594 1687 1738 1754 1913 2050 2117 2273 2299 2392 2494 2605 2777 2923 2966 2990 3173 3298 3391 3442 3458 3617 3754 3821 3977 4003 4096 4198 4309 4481 4627 4670 4694 4877 5002 5095 5146 5182 5321 5458 5525 5681 5707 5800 5902 6013 6185 6331 6374 6398 6581 6706 6799 |

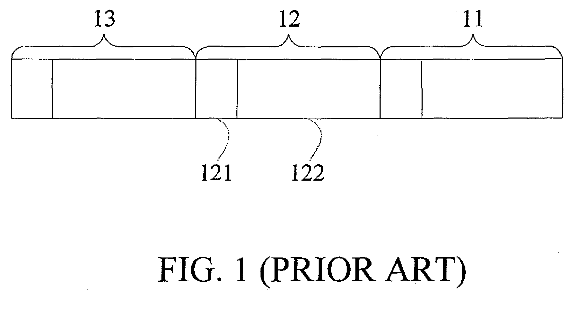

**FIG 1** illustrates a transmitted signal with OFDM symbols **11, 12,** and **13.** An OFDM symbol is transmitted in a time interval *T_{S}* µs. Each OFDM symbol comprises a guard part **121** and an active part **122,** wherein the guard part **121** indicates the beginning of the symbol and the active part **122** carries data. Since a symbol occupies a spectrum of 1/*Tᵤ* MHz, the number of available spectra of a channel whose spectrum from *K*ₘᵢₙ to *K*ₘₐₓ is (*K*ₘₐₓ - *K*ₘᵢₙ)/ *Tᵤ.*

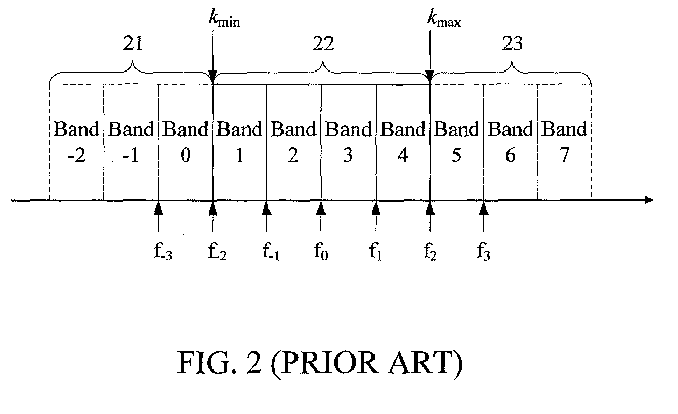

**FIG. 2** shows a transmission band **22** in the 8K transmission mode, which is divided into four sub-bands: Band 1, Band 2, Band 3, and Band 4. In this figure, it is assumed that a sub-carrier with the highest frequency *K*ₘₐₓ and a sub-carrier with the lowest frequency *K*ₘᵢₙ of the transmission band **22** are 6816 Hz and 0 Hz, respectively. Spectra of Band 1, Band 2, Band 3, and Band 4 are ranged from f₋₂ to f₋₁, f₋₁ to f₀, f₀ to f₁, and f₁ to f₂, respectively, wherein f₋₂= *K*ₘᵢₙ=0 Hz, f₋₁=1704 Hz, f₀=3408 Hz, f₁=5112 Hz, and f₂=*K*ₘₐₓ =6816 Hz. The center frequency of the transmission band **22** is f₀, 3408 Hz. Transmission bands **21** and **23** are adjacent bands.

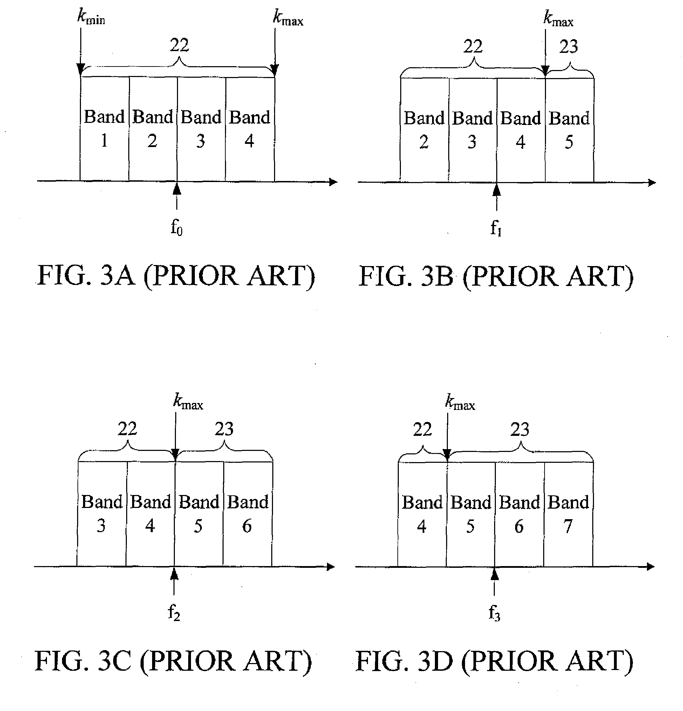

**FIGS. 3A, 3B, 3C,** and **3D** illustrate the possible situations where the receiver tunes to search the center frequency of the transmission band **22.** In **FIG 3A,** the receiver finds the correct frequency, f₀, if the receiver correctly determines that the four sub-bands, Band 1, Band 2, Band 3, and Band 4, form the transmission band **22.** In **FIG 3B,** the receiver erroneously treats f₁ as the center frequency of the transmission band **22** if it erroneously determines that the four sub-bands, Band 2, Band 3, Band 4, and Band 5, form the transmission band **22,** wherein Band 5 is one sub-band of the transmission bands **23.** In **FIG 3C,** the receiver erroneously treats f₂ as the center frequency of the transmission band **22** if it erroneously determines that the four sub-bands, Band 3, Band 4, Band 5, and Band 6, form the transmission band **22,** wherein Band 5 and Band 6 are sub-bands of the transmission band **23.** In **FIG 3D,** the receiver erroneously treats f₃ as the center frequency of the transmission band **22** if it erroneously determines that the four sub-bands, Band 4, Band 5, Band 6, and Band 7, form the transmission band **22,** wherein Band 5, Band 6, and Band 7 are sub-bands of the transmission band **23.** Once the center frequency is determined erroneously, the decoded data is completely useless.

Although DVB-T/H receivers can handle the frequency deviation, it is still possible that the transmitted signal cannot be decoded correctly if it is tuned in a frequency out of the acceptable frequency range as **FIGS. 3B, 3C** and **3D** show. Therefore, a solution that precisely searches for the center frequency of a receiver end is required in the industrial field.

### SUMMARY OF THE INVENTION

An object of this invention is to provide a method for processing a received Orthogonal Frequency Division Multiplexing (OFDM) signal. The method comprises the steps of searching a possible frequency of a symbol in the received OFDM signal for a Transmission Parameter Signaling (TPS) lock, wherein the possible frequency is close or equal to a center frequency of the symbol; and deciding an ambiguous frequency range or at least an ambiguous frequency according to a transmission mode of the TPS lock.

Another object of this invention is to provide an apparatus for processing a received OFDM signal. The apparatus comprises a tuner and a signal processing unit. The tuner is configured to receive the received OFDM signal. The signal processing unit is configured to search a possible frequency of a symbol in the received OFDM signal for a TPS lock and to decide an ambiguous frequency range according to a transmission mode of the TPS lock. The possible frequency is close or equal to a center frequency of the symbol.

Yet another object of this invention is to provide an apparatus for processing a received OFDM signal. The apparatus comprises: means for receiving the received OFDM signal; and means for searching a possible frequency of a symbol in the received OFDM signal for a TPS lock and for deciding an ambiguous frequency range according to a transmission mode of the TPS lock. The possible frequency is close or equal to a center frequency of the symbol.

A further object of this invention is to provide a digital video system for channel scanning according to a received OFDM signal. The system comprises a tuner and a signal processing unit. The tuner is configured to receive the OFDM signal. The signal processing unit is configured to search a possible frequency of a symbol in the received OFDM signal for a TPS lock and to decide an ambiguous frequency range according to a transmission mode of the TPS lock. The possible frequency is close or equal to a center frequency of the symbol.

The present invention is capable of searching for the center frequency of a symbol in a received OFDM signal more efficiently by utilizing the TPS's periodicity.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG 1** illustrates an OFDM signal;
**FIG 2** illustrates transmission bands in an 8K transmission mode;
**FIG 3A** illustrates a situation when a receiver is tuned to find the center frequency;
**FIG 3B** illustrates another situation when a receiver is tuned to find the center frequency;
**FIG 3C** illustrates another situation when a receiver is tuned to find the center frequency;
**FIG 3D** illustrates yet another situation when a receiver is tuned to find the center frequency;
**FIG 4** illustrates a first embodiment of the present invention;
**FIG 5** illustrates transmission bands in an 8K transmission mode; and
**FIG 6** illustrates a second embodiment of the present invention.

### DESCRIPTION OF THE PREFERRED EMBODIMENT

The present invention relates to systems, apparatuses, and methods for processing a received OFDM signal; more particularly, the present invention relates to systems, apparatuses, and methods for deriving frequency information of the received OFDM signal. Among the frequency information, the TPS's periodicity can be found and used to search for a center frequency of the received OFDM signal because of its reliability.

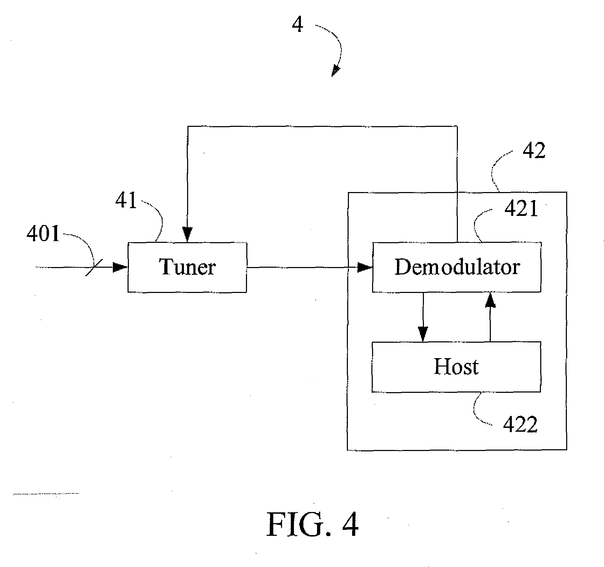

**FIG 4** illustrates a first embodiment of the present invention, which is a digital video system **4** for channel scanning according to a received OFDM signal **401.** The system **4** comprises a tuner **41** and a signal processing unit **42.** The tuner **41** is configured to receive the OFDM signal **401.** The signal processing unit **42** searches for a possible frequency of the received OFDM signal **401** for a TPS lock and decides an ambiguous frequency range according to a transmission mode of the TPS lock. The possible frequency is presumed to be the center frequency even if it is simply close to the center frequency of the received OFDM signal **401.**

To be more specific, assume that the transmission mode is 8K and the bandwidth of one symbol is divided into four sub-bands as illustrated in **FIG 2.** The signal processing unit **42** either searches the bandwidth from the lowest frequency to the highest frequency or from the highest frequency to the lowest frequency.

The signal processing unit **42** further comprises a demodulator **421** and a host **422.** The demodulator **421** generates auxiliary indicators according to the ambiguous frequency range, wherein the ambiguous frequency range is the bandwidth of the OFDM symbol and the auxiliary indicators for the 8K transmission mode indicate frequency information of the OFDM symbol such as f₋₃, f₋₂, f₋₁, f₁, f₂, and f₃. The demodulator **421** generates the auxiliary indicators based on the estimated signal and noise power. More specifically, each frequency which has high SNR is defined in one of the auxiliary indicators. The demodulator **421** tunes a frequency according to the aforementioned ambiguous frequency range when generating the auxiliary indicators. The host **422** determines the center frequency according to the possible frequency and the auxiliary indicators.

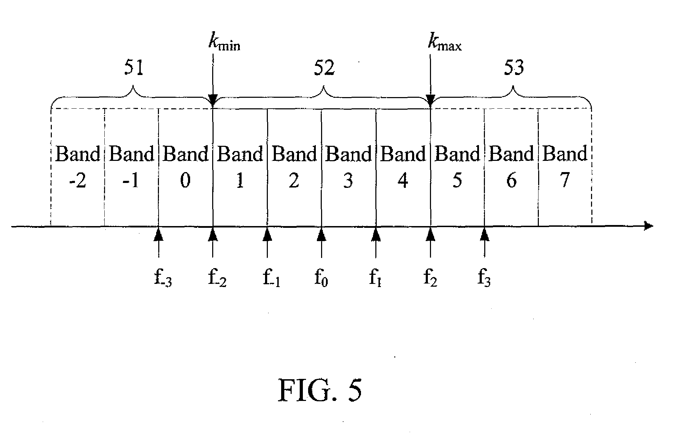

**FIG. 5** shows a transmission band **52** which is similar to the transmission band **22** in **FIG. 2.** In this case, the center frequency of the transmission band **52** is f₀. The signal processing unit **42** controls the center frequency of the tuner **41** until a TPS lock is indicated by the demodulator 421. For example, the receiver first tunes to f₀ and a TPS lock is indicated by the demodulator 421. Since the transmission mode is 8K, the ambiguous frequency range is determined. The adjacent frequencies are the frequencies one sub-band's bandwidth or two sub-band's bandwidths or three sub-band's apart from the possible frequency. In particular, the ambiguous frequenies are f₋₃, f₋₂, f₋₁, f₁, f₂, and f₃. The demodulator **421** now controls the frequency of the tuner 41 and tunes to the ambiguous frequencies f₋₃, f₋₂, f₋₁, f₁, f₂, and f₃, respectively to generate an auxiliary indicator for each ambiguous frequency. Finally, the host **422** finds the real center frequency according to the auxiliary indicators. In this embodiment, the frequency with the highest SNR among these frequencies is decided as the center frequency.

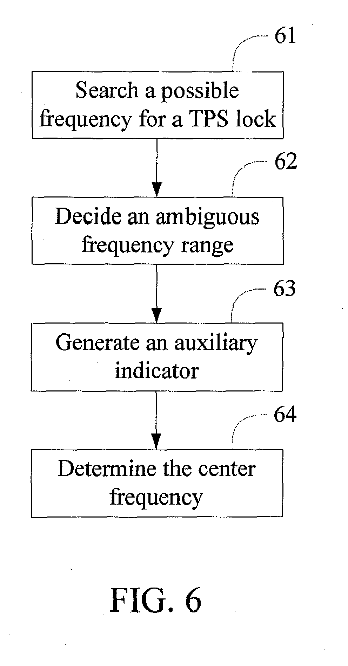

**FIG 6** illustrates a second embodiment of the present invention, which is a method for processing a received OFDM signal in a system like the first embodiment. In step **61,** a possible frequency of the received OFDM signal for a TPS lock is searched for. The possible frequency is close or equal to a center frequency of the received OFDM signal. Then, step **62** is executed to decide an ambiguous frequency range according to the transmission mode. Thereafter, step **63** is executed to generate auxiliary indicators according to the ambiguous frequency range. The auxiliary indicators are derived according to the estimated signal and noise power. Then, step **64** is executed to determine the center frequency according to the possible frequency and the auxiliary indicators. For example, the correct center frequency is the frequency with the highest SNR.

In addition to the steps shown in **FIG 6,** the second embodiment is capable of performing all the operations or functions recited in the first embodiment. Those skilled in the art can straightforwardly realize how the second embodiment performs these operations and functions based on the above descriptions of the first embodiment. Therefore, the descriptions for these operations and functions are redundant and not repeated herein.

The present invention is capable of searching for the center frequency of a symbol of a received OFDM signal more efficiently by utilizing TPS's periodicity.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A method for processing a received Orthogonal Frequency Division Multiplexing (OFDM) signal, comprising the steps of:
searching a possible frequency of a symbol in the received OFDM signal for a Transmission Parameter Signaling (TPS) lock, the possible frequency being close or equal to a center frequency of the symbol; and
deciding an ambiguous frequency range or at least an ambiguous frequency according to a transmission mode of the TPS lock.

2. The method of claim 1, further comprising the step of generating an auxiliary indicator according to the ambiguous frequency range or the ambiguous frequency.

3. The method of claim 2, wherein the generating step comprises the step of tuning a frequency according to the ambiguous frequency range or the ambiguous frequency.

4. The method of claim 2, further comprising the step of determining the center frequency according to the possible frequency and the auxiliary indicator.

5. The method of claim 2, wherein the auxiliary indicator is derived according to the estimated signal and noise power.

6. The method of claim 2, wherein the auxiliary indicator carries frequency information of the received OFDM signal.

7. The method of claim 6, wherein frequency information comprises an adjacent frequency of the possible frequency.

8. The method of claim 1, wherein the searching step begins from a lowest frequency to a highest frequency or from the highest frequency to the lowest frequency.

9. The method of claim 1, wherein the received OFDM signal is adapted for one of a Digital Video Broadcasting-Terrestrial (DVB-T) system and a Digital Video Broadcasting-Handheld (DVB-H) system, and the transmission mode is one of a 4K and an 8K mode.

10. An apparatus for processing a received Orthogonal Frequency Division Multiplexing (OFDM) signal, comprising:
a tuner for receiving the received OFDM signal; and
a signal processing unit for searching a possible frequency of a symbol in the received OFDM signal for a Transmission Parameter Signaling (TPS) lock and for deciding an ambiguous frequency range according to a transmission mode of the TPS lock;
wherein the possible frequency is close or equal to a center frequency of the symbol.

11. The apparatus of claim 10, wherein the signal processing unit comprises a demodulator for generating an auxiliary indicator according to the ambiguous frequency range.

12. The apparatus of claim 11, wherein the demodulator tunes a frequency according to the ambiguous frequency range when generating the auxiliary indicator.

13. The apparatus of claim 11, wherein the signal processing unit comprises a host for determining the center frequency according to the possible frequency and the auxiliary indicator.

14. The apparatus of claim 11, wherein the auxiliary indicator is derived according to the estimated signal and noise power.

15. The apparatus of claim 11, wherein the auxiliary indicator carries frequency information of the received OFDM signal.

16. The apparatus of claim 15, wherein frequency information comprises an adjacent frequency of the possible frequency.

17. The apparatus of claim 10, wherein the signal processing unit searches from a lowest frequency to a highest frequency or from the highest frequency to the lowest frequency.

18. The apparatus of claim 10, wherein the received OFDM signal is adapted for one of a Digital Video Broadcasting-Terrestrial (DVB-T) system and a Digital Video Broadcasting-Handheld (DVB-H) system, and the transmission mode is one of a 4K and an 8K mode.

19. An apparatus for processing a received Orthogonal Frequency Division Multiplexing (OFDM) signal, comprising:
means for receiving the received OFDM signal; and
means for searching a possible frequency of a symbol in the received OFDM signal for a Transmission Parameter Signaling (TPS) lock and for deciding an ambiguous frequency range according to a transmission mode of the TPS lock;
wherein the possible frequency is close or equal to a center frequency of the symbol.

20. The apparatus of claim 19, wherein the searching and deciding means further comprises means for generating an auxiliary indicator according to the ambiguous frequency range.

21. The apparatus of claim 20, wherein the generating means tunes a frequency according to the ambiguous frequency range when generating the auxiliary indicator.

22. The apparatus of claim 20, wherein the searching and deciding means comprises means for determining the center frequency according to the possible frequency and the auxiliary indicator.

23. The apparatus of claim 20, wherein the auxiliary indicator is derived according to the estimated signal and noise power.

24. The apparatus of claim 20, wherein the auxiliary indicator carries frequency information of the received OFDM signal.

25. The apparatus of claim 24, wherein frequency information comprises an adjacent frequency of the possible frequency.

26. The apparatus of claim 19, wherein the searching and deciding means searches from a lowest frequency to a highest frequency or from the highest frequency to the lowest frequency.

27. The apparatus of claim 19, wherein the received OFDM signal is adapted for one of a Digital Video Broadcasting-Terrestrial (DVB-T) system and a Digital Video Broadcasting-Handheld (DVB-H) system, and the transmission mode is one of a 4K and an 8K mode.

28. A digital video system for channel scanning according to a received Orthogonal Frequency Division Multiplexing (OFDM) signal, comprising:
a tuner for receiving the received OFDM signal; and
a signal processing unit for searching a possible frequency of a symbol of the received OFDM signal for a Transmission Parameter Signaling (TPS) lock and for deciding an ambiguous frequency range according to a transmission mode of the TPS lock;
wherein the possible frequency is close or equal to a center frequency of the symbol.

29. The digital video system of claim 28, wherein the signal processing unit comprises a demodulator for generating an auxiliary indicator according to the ambiguous frequency range.

30. The digital video system of claim 29, wherein the demodulator tunes a frequency according to the ambiguous frequency range when generating the auxiliary indicator.

31. The digital video system of claim 29, wherein the signal processing unit comprises a host for determining the center frequency according to the possible frequency and the auxiliary indicator.

32. The digital video system of claim 29, wherein the auxiliary indicator is derived according to the estimated signal and noise power.

33. The digital video system of claim 29, wherein the auxiliary indicator carries frequency information of the received OFDM signal.

34. The digital video system of claim 33, wherein frequency information comprises an adjacent frequency of the possible frequency.

35. The digital video system of claim 28, wherein the signal processing unit searches from a lowest frequency to a highest frequency or from the highest frequency to the lowest frequency.

36. The digital video system of claim 28, wherein the received OFDM signal is adapted for one of a Digital Video Broadcasting-Terrestrial (DVB-T) system and a Digital Video Broadcasting-Handheld (DVB-H) system, and the transmission mode is one of a 4K and an 8K mode.
